# EUROPÄISCHE PATENTANMELDUNG

(11) **EP 1 270 059 A1**
(43) Veröffentlichungstag der Anmeldung: **02.01.2003**
(21) Anmeldenummer: 01115557.9
(22) Anmeldetag: 28.06.2001
(51) Int. Cl.: B01D 46/10, B01D 46/30

(54) **Einweg-Filterelement und Faltzuschnitt zur Herstellung des Filterelements**

(71) Anmelder: Hammes, Frank, 9326 Horn (CH)
(72) Erfinder: Hammes, Frank, 9326 Horn (CH)
(74) Vertreter: Riebling, Peter, Dr.-Ing.

(57) **Zusammenfassung**

Die Erfindung betrifft ein Einweg-Filterelement und einen Faltzuschnitt (10) zur Herstellung des Filterelements. Das Filterelement umfasst einen ersten aus einem Faltzuschnitt gebildeten Behälter (2) und einen zweiten aus dem selben Faltzuschnitt gebildeten Behälter (3), wobei jeder Behälter eine mit Öffnungen (16) versehene Front- und Rückwand (14,15), eine erste und zweite Seitenwand (17,18) und eine erste und zweite Stirnwand (20) aufweist und ein Filtermedium (30) beinhaltet, wobei die beiden Behälter (2,3) längs ihrer ersten Seitenwände (17) beweglich miteinander verbunden und in einem definierten Winkel zueinander mit ihren Stirnseiten (20) zwischen zwei Seitenteilen gehalten sind.
Das Filterelement ist kostengünstig in der Herstellung, leicht aber dennoch stabil, hat einen günstigen Luftdurchgangswiderstand - dank großer Anströmfläche - und ist umweltfreundlich zu entsorgen. Das Filterelement kann in eine Filterelementaufnahme mit Dichtsteg eingesetzt werden und dichtet dank planer Auflagefläche der Seitenwände außerhalb des umlaufenden Dichtsteges und Auflage der äußeren Behälter auf den Dichtsteg ohne Schaumgummidichtung luftdicht ab.

## Beschreibung

Die Erfindung betrifft ein Einweg-Filterelement und einen Faltzuschnitt zur Herstellung des Filterelements.

Es ist bekannt, Feststoff-Filtermedien zur Luftfiltration zu verwenden. Das Filtermedium kann entweder ein granulares, kornförmiges oder stäbchenförmiges Filtermedium, z.B. Aktivkohle oder imprägnierte Tonerde, sein. Es kann auch Blöcke aus granularer Aktivkohle, schaumgebundene Aktivkohlekügelchen, imprägnierten Filterschaum, Filtermatten oder plissierte Filterpackete enthalten.
Das Filtermedium muss in geeigneten, formstabilen Behältern aufgenommen werden, so dass sich ein Filterbett von bestimmter Dicke ergibt, das von der zu reinigenden Luft durchströmt werden kann. Hierzu müssen die Behälter Öffnungen auf entgegengesetzten Seiten des Filterbetts aufweisen, die einen Lufteintritt und -austritt erlauben. Derartige Filterbehälter bestehen aus Gründen der Stabilität meist aus Metall oder Kunststoff.

Die beschriebenen Filterelemente werden z.B. in lufttechnischen Anlagen, Luftreinigungsgeräten, Klimageräten, Ventilatoren, medizinischen Geräten, Fahrzeug-Ventilationssystemen etc. eingesetzt.

Eine Form eines bekannten Filterelements ist kastenartig aufgebaut und besteht aus zwei großflächigen, zueinander beabstandeten Wandflächen mit Öffnungen für den Luftdurchtritt, die durch schmale Seitenwände miteinander verbunden sind. Dieser Kasten wird mit dem Filtermedium gefüllt und in ein Luftreinigungssystem eingesetzt.
Zur Vergrößerung der effektiven Luftdurchtrittsfläche können die Wandflächen V-förmig ausgebildet sein.

Für die Herstellung derartiger Flachbett-Filterelemente muss das Material, aus dem die Filterelemente bestehen, stabil und steif genug sein, um ein Durchbiegen oder Ausbauchen des Filterelementes zu verhindern, so dass sich keine Hohlräume oder Umgehungsstrecken zwischen den Wänden des Filterelements und dem Filtermedium ergeben. Derartige Umgehungsstrecken verhindern die effektive Filtration der Luft, da diese unter Nutzung der Umgehungsstrecken am Filtermedium vorbeiströmen kann. Derartige Umgehungsstrecken können sich auch durch Setzen oder Absacken des Filtermediums aufgrund der Schwerkraft ergeben.

Ein weiteres Kriterium bei der Herstellung der Filterelemente ist ein möglichst geringer Luftdurchtrittswiderstand, so dass nur eine geringe Leistung aufgebracht werden muss, um die Luft durch die Filterelemente zu drücken. Ferner müssen die Filterelemente Umwelteinflüssen, wie Temperatur, Luftfeuchtigkeit, etc. widerstehen können.

Bisher werden hauptsächlich wiederverwendbare Filterelemente benutzt. Wenn die Filterwirkung des Filtermediums nachlässt, kann es dem Filterelement entnommen und durch ein neues Filtermedium ersetzt werden. Der Austausch des Filtermediums ist jedoch zeit- und kostenintensiv.
Der Trend geht daher zu Einweg-Filterelementen, die nach Gebrauch weggeworfen werden. Derartige Wegwerf-Filterelemente müssen vollständig veraschbar oder biologisch abbaubar sein und dürfen beim Verbrennen oder Deponieren keine umweltschädlichen Stoffe absondert. Ferner müssen derartige Filterelemente kostengünstig herstellbar sein und aus einem Material bestehen, das mit den verwendeten Filtermedien nicht chemisch reagiert.

Es hat sich herausgestellt, dass Holz oder starke Kartonplatten den oben genannten Anforderungen an ein Material zu Herstellung von Wegwerf-Filterelementen genügen. Eine Herstellung von Filterelementen aus diesen Materialien war bisher relativ aufwendig und teuer.

Die Aufgabe der Erfindung besteht darin, ein Einweg-Filterelement vorzuschlagen, welches für die Aufnahme von Feststoff-Filtermedien ausreichend stabil, bezüglich Material- und Arbeitsaufwand kostengünstig herstellbar und umweltverträglich zu entsorgen ist.

Diese Aufgabe wird durch die Merkmale der unabhängigen Patentansprüche gelöst.

Vorteilhafte Ausführungsformen und Weiterbildungen der Erfindung sind in den abhängigen Patentansprüchen angegeben.

Das erfindungsgemäße Filterelement umfasst in einer bevorzugten Ausführungsform einen ersten aus einem Faltzuschnitt gebildeten Behälter und einen zweiten aus dem selben Faltzuschnitt gebildeten Behälter, wobei jeder Behälter eine mit Öffnungen versehene Front- und Rückwand, eine erste und zweite Seitenwand und eine erste und zweite Stirnwand aufweist und ein Filtermedium beinhaltet, wobei die beiden Behälter längs ihrer ersten Seitenwände beweglich miteinander verbunden und in einem definierten Winkel zueinander mit ihren Stirnseiten zwischen zwei Seitenteilen gehalten sind. Zwischen den beiden Seitenteilen können vorzugsweise mehrere der beschriebenen Behälter-Paare gehalten sein.

Das Filterelement ist kostengünstig in der Herstellung, leicht aber dennoch stabil, hat einen günstigen Luftdurchgangswiderstand - dank großer Anströmfläche - und ist umweltfreundlich zu entsorgen.

Ein einer bevorzugten Ausführung sind zwei Behälterteile aus einem Kartonstück gefertigt und so an einem Schenkel miteinander verbunden, dass die Behälter in einem V-Winkel frei zueinander beweglich sind. Somit kann die Behälterteilkombination in verschiedenen Filterelementen zum Einsatz kommen. Bei höherer Schadstoffbelastung kann ein steilerer Winkel gewählt werden. Für hohe Luftmengen kann ein stumpferer Winkel gewählt werden. Ebenfalls kann mit der Auswahl des Winkels die Höhe des Filterelements definiert werden.

Der Filterbehälter wird aus einem Faltzuschnitt hergestellt, wobei sich aus einem Faltzuschnitt jeweils zwei miteinander verbundene Filtergehäuse ergeben. Der Faltzuschnitt besteht vorzugsweise aus Karton, insbesondere Wellkarton, kann aber ebenso aus einem anderen faltbaren Material, wie z.B. Kunststoff oder Metallblech, hergestellt sein.
Der Faltzuschnitt zur Herstellung der Behälter für das Filterelement besteht aus zwei Hälften. Jede der Hälften umfasst eine erste Seitenwand, die entlang einer Falzlinie mit einer Frontwand verbunden ist, eine zweite Seitenwand, die entlang einer Falzlinie mit der Frontwand verbunden ist, eine Rückwand, die entlang einer Falzlinie mit der zweiten Seitenwand verbunden ist, einen Lappen, der entlang einer Falzlinie mit der Rückwand verbunden ist, Lappen, die entlang jeweils einer Falzlinie mit der Frontwand verbunden sind, und Stirnwände, die entlang jeweils einer Falzlinie mit der Rückwand verbunden sind.
Jede Hälfte des Faltzuschnitts wird durch Falten entlang der Falzlinien zu jeweils einem im Querschnitt rechteckigen Behälter gefaltet, dessen Front und Rückwand sowie die Seitenwände im wesentlichen parallel und in einem Abstand zueinander angeordnet sind, wobei die Außenseite des äußeren Lappens mit der Innenseite der ersten Seitenwand verbunden ist und die Innenseiten der Stirnwände jeweils mit den Außenseiten der stirnseitigen Lappen verbunden sind.

Das Abkanten der Kartonteile wird durch Perforation, Anschlitzen oder Kerben erreicht. Das Verkleben der Teile kann mit Heißkleber oder drucksensitivem Kontaktkleber geschehen.

Um einen günstigen Luftdurchtrittswiderstand zu erreichen, sind die Öffnungen in der Front- und Rückwand relativ groß dimensioniert. Auf den Innenseiten der Front- und Rückwand ist ein engmaschiges Gitter oder Netz angebracht, dessen Maschen derart dimensioniert sind, dass sie einen freien Gasdurchtritt erlauben, das Filtermedium jedoch im Behälter zurückhalten, insbesondere wenn Filtermedien aus einem granularen, korn- oder stäbchenförmigen Feststoff eingesetzt werden.

Das Gitter besteht vorzugsweise aus gewobenen, extrudiertem oder gesponnenem Material aus synthetischen oder mineralischen Fasern mit oder ohne Beschichtung. Das Gitter muss des Granulat zurückhalten können ohne die Luft zu stark zu reduzieren und ohne zu bauchen.
Bei Einsatz eines Schwebstofffilterpacks, kann das Gitter dazu dienen, das weiche, leicht brüchige Filterpack vor Beschädigung zu schützen.

Um bei der Einbringung von granularen Medien ein Bauchen der Behälterteile zu verhindern, welches ein Absacken des Mediums und somit möglicherweise ein Vorbeiströmen der zu filternden Luft am Medium zur Folge hätte, hat eine bevorzugte Ausführung der Erfindung interne Abstandhalter oder Verbindungsstücke, die jeweils die Front- und Rückwand miteinander verbinden. Dies erhöht die gesamte Stabilität der Behälterteile, was besonders bei horizontaler Anordnung der Behälterteile wichtig ist. Die Verbindungsstücke halten insgesamt die Dicke des Behälterteils auch in der Mitte auf einem definiertem Maß und gewährleisten somit konstanten Luftwiderstand.
Es sind mehrere Ausführung der Abstands- und Verbindungsstücke denkbar. Es könnten Teile aus Holz, Kunststoff etc. sein, die zwischen den Öffnungen auf den Stegen der Front- und Rückwand von innen verklebt sind. Es könnte sich auch um einen einfachen Stab handeln der innen einen Abstandhalter hat und mit einem Dorn auf jeder Seite durch die Front- und Rückwand gestoßen wird und von außen dann mit einem Einrastblättchen fixiert wird.
Die Verbindungsstücke sorgen außerdem dafür, das granulare Medium im Behälterteil zu stabilisieren, indem sie ein großräumiges Verschieben verhindern.

Die Seitenteile sind vorzugsweise ebenfalls aus einem Faltzuschnitt gebildet, und sind in ihrer Formgebung etwa rechteckig bis trapezförmig. An einer Längsseite weisen sie Lappen und an der anderen Längsseite durch Verbindungsabschnitte verbundene Lappen auf, wobei die Lappen entlang von Falzlinien derart gefaltet sind, dass die auf den Seitenteilen zu liegen kommen und sich zwischen den Lappen definierte Aufnahmen für die Stirnseiten der Behälter ergeben. Die oben und unten angeordneten Lappen werden so umgeschlagen, dass eine Art Führungsrinnen entstehen, in welche die Behälterteile eingefügt werden. Das Umschlagen hat zudem eine Verstärkung der Seitenwände zur Folge.
In einer Weiterbildung der Erfindung ist vorgesehen, jeden Behälter in zwei Kammern zu unterteilen, die von der zu reinigenden Luft nacheinander durchströmt werden. Die Behälterteile können also ein oder mehrkammerig ausgeführt werden, um somit mit zwei unterschiedlichen Filtermedien ausgerüstet zu werden. In der Filtration von gasförmigen Luftschadstoffgemischen ist dies besonders vorteilhaft, da für verschiedene Schadstoffgruppen verschiedene Filtermedien benötigt werden. So kann zum Beispiel zuerst eine Aktivkohleschicht und dann eine Schicht aus imprägnierter Tonerde eingesetzt werden. Es ist auch eine Kombination von Filtermedien für partikelförmige und gasförmige Schadstoffe denkbar.
Die Unterteilung der Behälter erfolgt vorzugsweise durch eine Zwischenwand, die entlang einer Falzlinie mit dem Lappen verbunden ist, einen Lappen aufweist, der in gefaltetem Zustand des Behälters mit der zweiten Seitenwand verbunden wird und Lappen aufweist, die mit den Lappen der Stirnabschnitte verbunden werden.

Die Filterbehälterkonstruktion hat folgende Vorteile gegenüber herkömmlichen Filterbehältern:
- sehr günstige Materialkosten, da sie aus Karton, Wellkarton oder dünnem Kunststoff gefertigt werden kann.
- sehr günstige Werkzeugkosten, da nur zwei einfache Stanzformen für die Faltzuschnitte benötigt werden.
- umweltfreundlich, da vollständig veraschbar, und bei Karton kompostierbar, und ein nachwachsender Rohstoff.
- hohe Eigenstabilität bei minimalem Eigengewicht. Die Behälter können aus dünnerem und leichterem Material gefertigt werden, da einen interne Verstrebung besteht.
- sehr niedriger Druckverlust trotz großer Filterfläche durch V-förmige Anordnung der Behälterteile innerhalb des Elements.
- entweder als einschichtige oder mehrschichtige Ausführung möglich
- Es wird sehr wenig Klebstoff benötigt, um die Teile zusammenzuhalten.
- Es ist eine schnelle Montage möglich, da die Behälterteile in einem Arbeitsgang verklebt werden können.
- Die Behälterteile können einzeln befüllt und verschlossen werden und in einem separaten Arbeitsgang mit den Seitenwänden verklebt werden. Hieraus ergeben sich produktionstechnische Einsparungen.
- Die Erfindung eignet sich sehr gut für kleinere Filterelemente mit höherer V Element Dichte.

Das Filterelement kann in eine Filterelementaufnahme mit Dichtsteg eingesetzt werden und dichtet dank planer Auflagefläche der Seitenwände außerhalb des umlaufenden Dichtsteges und Auflage der äußeren Behälter auf den Dichtsteg ohne Schaumgummidichtung luftdicht ab.

Nachfolgend wird ein bevorzugtes Ausführungsbeispiel der Erfindung anhand mehrere Zeichnungsfiguren näher erläutert. Aus den Zeichnungen und deren Beschreibung ergeben sich weitere Merkmale, Vorteile und Anwendungsmöglichkeiten der Erfindung. Es zeigt:
- Figur 1:: eine perspektivisch Ansicht des Filterelements im zusammengebauten Zustand;
- Figur 2:: eine Draufsicht auf den Faltzuschnitt im Ausgangszustand;
- Figur 3:: einen Halbschnitt durch die aus dem Faltzuschnitt hergestellten Filterbehälter;
- Figur 4:: eine Draufsicht auf die Seitenteile als Faltzuschnitt mit angedeuteten, umgefalteten Lappen;
- Figur 5:: eine perspektivische Ansicht des Zusammenbaus der Filterbehälter mit einer Seitenwand;
- Figur 6:: eine Draufsicht auf den Faltzuschnitt in einer zweiten Ausführungsform im Ausgangszustand;
- Figur 7:: einen Halbschnitt durch den die durch den Faltzuschnitt gemäß Figur 6 hergestellten Filterbehälter;
- Figur 8: einen Schnitt parallel zu einem Filterbehälter durch das in eine Filterelementaufnahme eingesetzte Filterelement;
- Figur 9: einen Schnitt parallel zu den Seitenwänden durch das in eine Filterelementaufnahme eingesetzte Filterelement.

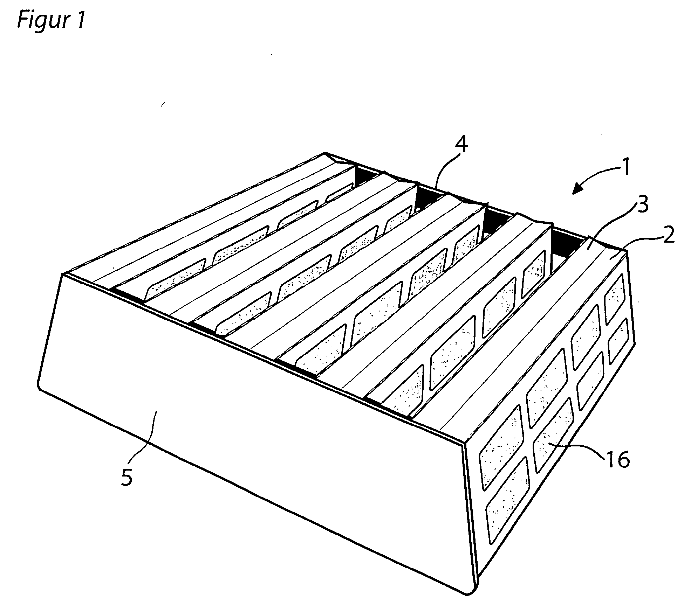

Figur 1 ist eine Darstellung des Filterelementes 1, welches aus mehreren miteinander verbundenen Filterbehältern 2, 3 besteht, die von zwei Seitenteilen 4, 5 gehalten werden. Die beiden Filterbehälter 2, 3 sind in einem V-förmigen Winkel zueinander gestellt, so dass bezogen auf die Grundfläche des Filterelementes 1 eine große Anzahl von Filterelementen 2, 3 nebeneinander eingesetzt werden können. Das Filterelement 1 wird in ein Luftreinigungssystem eingesetzt, wobei die zu filternde Luft das Filterelement 1 zum Beispiel von unten anströmt, das im Filterbehälter enthaltene Filtermedium durchströmt und das Filterelement 1 oben wieder durch die Öffnungen 16 verlässt.

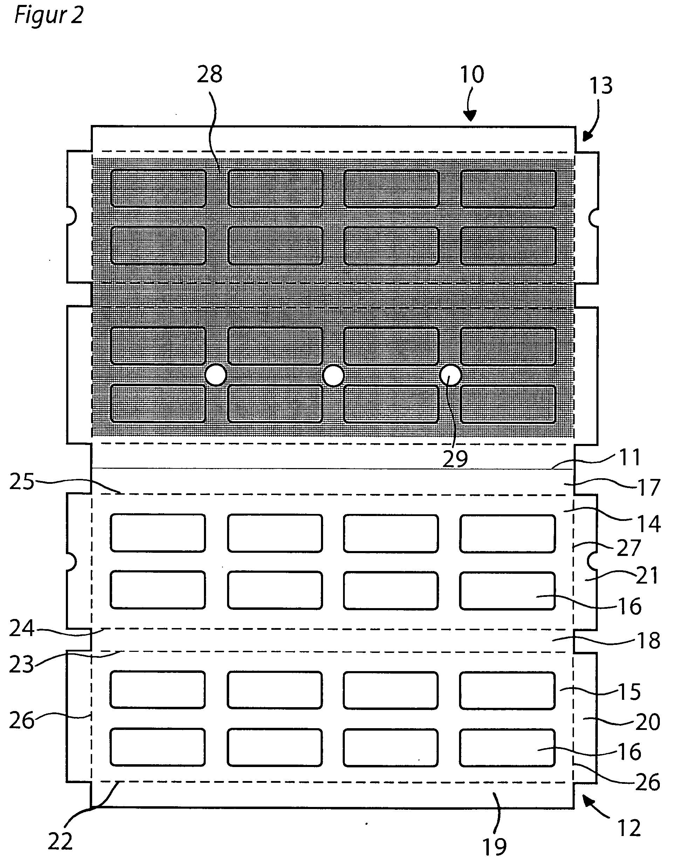

Die miteinander verbundenen Filterelemente 2, 3 werden bevorzugt aus einem einzigen Faltzuschnitt 10 hergestellt, der in Figur 2 dargestellt ist. Der Faltzuschnitt ist entlang seiner Mittellinie 11 in eine linke Hälfte 12 und in eine rechte Hälfte 13 unterteilt. Aus jeder Hälfte 12, 13 kann jeweils ein Behälter 2, 3 gefaltet werden. Jede der beiden Hälften 12, 13 umfasst eine erste Seitenwand 17, die entlang einer Falzlinie 25 mit einer Frontwand 14 verbunden ist. Eine zweite Seitenwand 18 ist entlang einer weiteren Falzlinie 24 mit der Frontwand verbunden. Eine Rückwand 15 schließt sich entlang einer Falzlinie 23 an die zweite Seitenwand an. Abschließend weist die Rückwand einen Lappen 19 auf, der entlang einer Falzlinie 22 mit der Rückwand 15 verbunden ist. Die jeweils freien Stirnseiten der Frontwand 14 weist Lappen 21, die entlang einer Falzlinie 27 mit der Frontwand 14 verbunden sind. Ebenso weist die Rückwand 15 entlang der Falzlinien 27 mit dieser verbundene Stirnwände 20 auf. Sowohl die Frontwand 14 als auch die Rückwand 15 weist eine Anzahl von Öffnungen 16 auf, die dem Luftdurchtritt dienen.

Jede Hälfte 12, 13 des Faltzuschnittes 10 wird durch falten entlang der beschriebenen Falzlinien zu jeweils einem im Querschnitt rechteckigen Behälter 2, 3 gefaltet, dessen Front- und Rückwand sowie die Seitenwände im wesentlichen parallel und in einem gegenseitigen Abstand zueinander angeordneten sind, wobei die Außenseiten des Lappens 19 jeweils mit der Innenseite der ersten Seitenwand 17 verbunden werden, und die Innenseiten der Stirnwände 20 jeweils mit den Außenseiten der Lappen 21 sich verbunden werden. Die Verbindung der Teile wird durch einen Klebstoff erzielt, der vor dem falten an den entsprechenden Flächen aufgetragen wird.

Die Öffnungen 16 der Front- und Rückwände 14, 15 werden mit einem engmaschigen Netz 28 abgedeckt, dessen Maschenabstand kleiner als die verwendete Korngröße des jeweiligen Filtermediums ist.

Zur Stabilisierung des Behälters, insbesondere der Frontwand 14, gegenüber die Rückwand sind Abstandhalter 29 vorgesehen die, wie auch das Netz 28, auf die Front- und Rückwand geklebt oder mit Klammern festgeheftet werden.

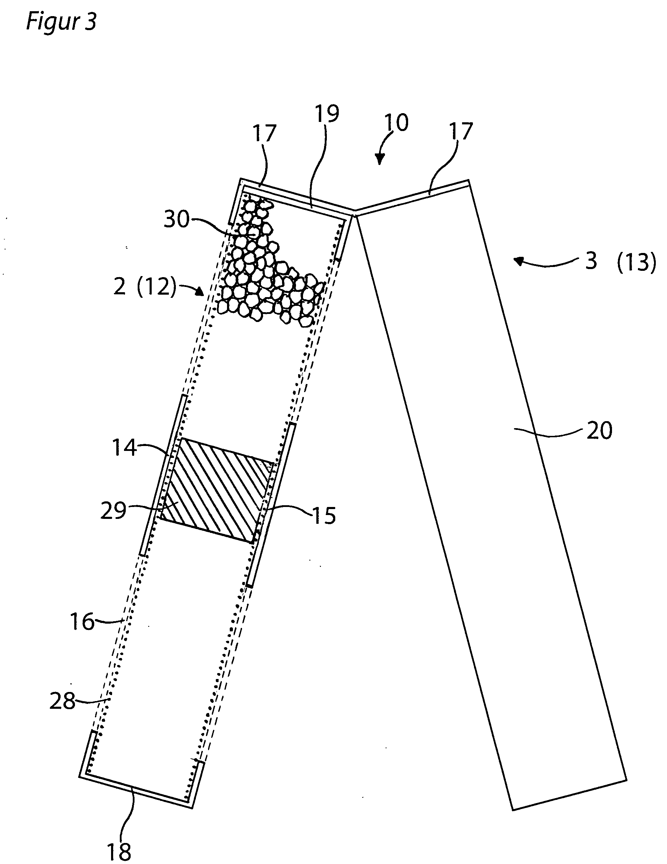

Figur 3 zeigt im linken Teil einen Schnitt durch einen aus dem Faltzuschnitt 10 gefalteten Behälter 2. Man erkennt den rechteckigen Querschnitt des Behälters, der durch verkleben der Seitenwand 17 mit dem Lappen 19 zusammengehalten wird. Auf der Innenseite der Front- und Rückwand 14, 15 ist das Gitternetz 28 zu erkennen. Der Hohlraum des Behälters ist mit dem Filtermedium 30 ausgefüllt. Das Filtermedium wird seitlich an den Stirnwänden eingebracht, bevor die Stirnwand 20 mit dem zugeordneten Lappen 21 verklebt und verschlossen wird. In Figur 3 erkennt man auch den Abstandhalter 29, der für einen definierten Abstand zwischen Frontwand 14 und Rückwand 15 sorgt. Die beiden aus dem Faltzuschnitt gebildeten Behälter 2, 3 sind jeweils an ihren oberen Seitenwänden 17 miteinander verbunden und können in einem Winkel von 0° bis 180° Grad gegeneinander angestellt werden.

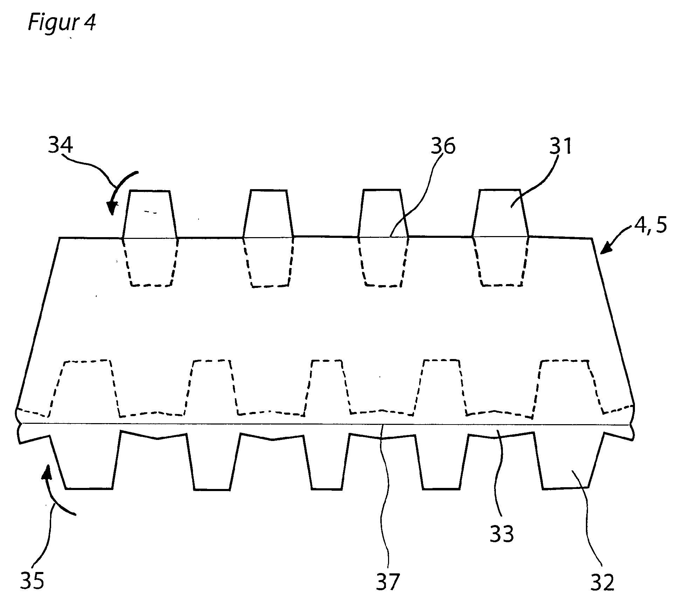

Figur 4 zeigt die Konstruktion der Seitenwände zur Halterung der Filterbehälter 2, 3. Die Seitenwände 4, 5 bestehen ebenfalls aus einem Faltzuschnitt, der in seiner Grundform viereckig ausgebildet ist und bevorzugt mit dem Winkel der äußeren Filterbehälter abschließt. Der Faltzuschnitt weist an der Oberseite eine Anzahl von Lappen 31 auf, die vorzugsweise trapezförmig ausgebildet sind. Die Lappen 31 werden zur Komplettierung der Seitenwand in Pfeilrichtung 34 nach oben gefaltet und mit der Seitenwand verklebt. Die Anzahl der Lappen 31 richtet sich nach der Anzahl der einzusetzenden Filterbehälterpaare 2, 3.

An der Unterseite weist die Seitenwand Lappen 32 auf, die mittels Verbindungsabschnitten 33 miteinander verbunden sind. Auch die Lappen 32 zusammen mit den Verbindungsabschnitten werden in Pfeilrichtung 35 auf das Seitenteil gefaltet und mit diesem verklebt. Das Falten der Lappen 31, 32 erfolgt entlang von Falzlinien 36, 37.

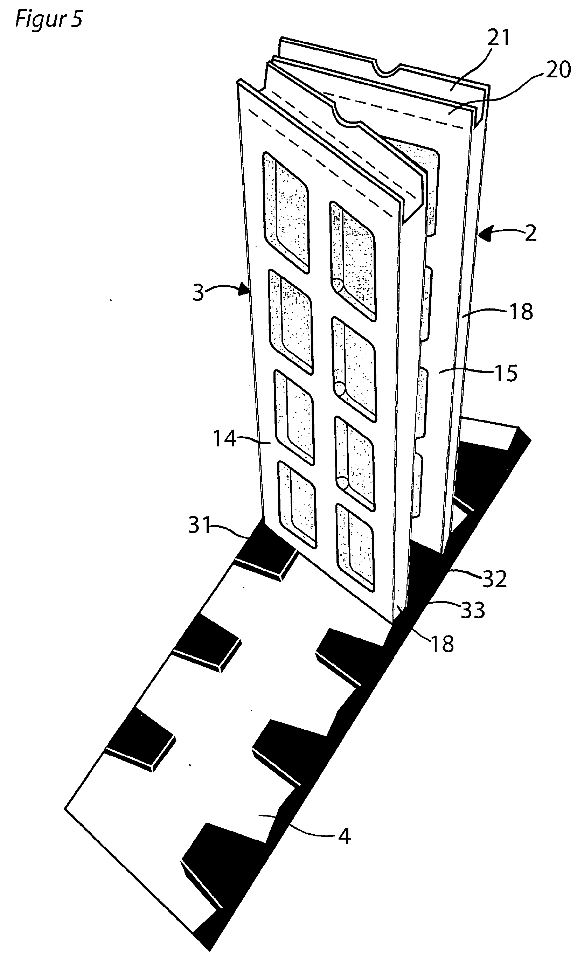

Figur 5 zeigt ein Seitenteil 4 in fertiggefalteten Zustand und das einsetzen und verbinden von Filterbehältern 2, 3 mit diesem Seitenteil. Die Lappen 31, 32 beziehungsweise Verbindungsabschnitte 33 sind derart geformt, das sie entsprechende Führungen ausbilden, so dass die miteinander verbundenen Behälter 2,3 automatisch in der richtigen V-förmigen Ausrichtung eingesetzt werden können, wobei ein Teil der Seitenkante der jeweiligen Frontwand 14 der Behälter seitlich an den Lappen 31 anliegen und Teile der Seitenkanten der jeweiligen Rückwand 15 seitlich an den Lappen 32 anliegen. Die jeweiligen zweiten Seitenwände 18 der Behälter 2, 3 liegen auf den Verbindungsabschnitten 33 auf. Die Behälter 2, 3 werden in dieser Ausrichtung mit der Seitenwand 4 luftdicht verklebt. Durch die offenen Laschen 20, 21, welche die Stirnwände der Behälter 2, 3 bilden, kann nun das Filtermedium eingefüllt werden, bevor die zweite Seitenwand 5 auf die Stirnwände der Behälter 2, 3 aufgeklebt wird. Es ist ebenfalls möglich, die Behälter 2; 3 vor der Verklebung mit den Seitenwänden 4; 5 mit Filtermedium zu befüllen und eigenständig zu verkleben bevor die Behälter mit den Seitenwänden verklebt werden. Es ist ersichtlich, dass im vorliegenden Beispiel fünf Behälterpaare 2, 3 mit den Seitenwänden 4, 5 verbunden werden können, so dass sich das in Figur 1 gezeigte Filterelement 1 ergibt.

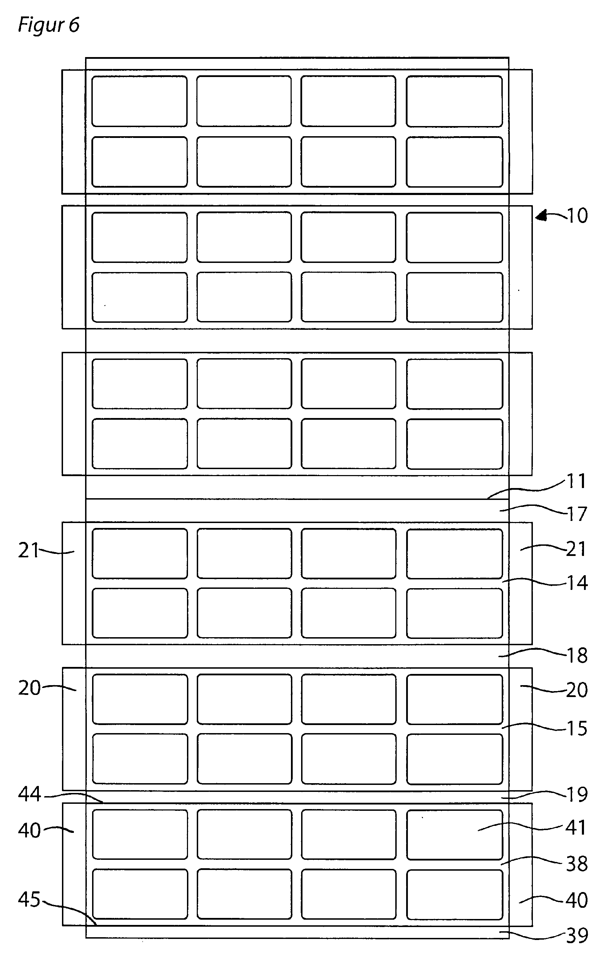

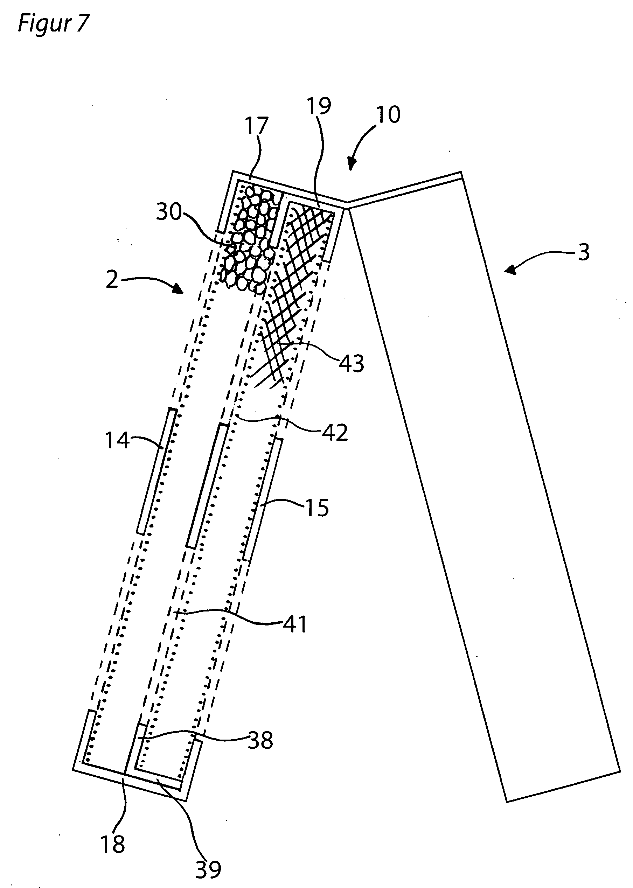

Figur 6 zeigt eine weitere Ausführungsform eines Faltzuschnittes 10, welcher zur Herstellung von 2 Filterbehältern mit jeweils zwei Kammern geeignet ist. Zur Aufteilung jedes Behälters in zwei Kammern schließt sich an den Lappen 19 vergleiche Figur 2 eine Zwischenwand 38 an, die entlang einer Falzlinie 44 mit dem Lappen 19 verbunden ist. An ihrer freien Längsseite weist die Zwischenwand 38 einen Lappen 39 auf. Die Zwischenwand 38 weist ebenso wie die Frontwand und Rückwand Öffnungen 41 auf, die mit einem Gitternetz (vergleiche Figur 7) abgedeckt sind. Beim falten des Behälters wird die Zwischenwand 38 über die Rückwand 15 gefaltet und der freie Lappen 39 mit der zweiten Seitenwand 18 verklebt. Die ganze Anordnung wird nun nochmals über die Frontwand 14 gefaltet und die Lappen 19 mit der ersten Seitenwand 17 verklebt.

Es ergibt sich die Anordnung, wie sie im Querschnitt in Figur 7 dargestellt ist. Man erkennt die beiden durch die Zwischenwand 38 getrennten Kammern im Behälter 2. In der linken Kammer kann zum Beispiel ein granulares Filtermedium eingefüllt werden, während in der rechten Kammer zum Beispiel ein Schwebstofffilter in Form eines Faservlieses 43 angeordnet ist. Die jeweiligen Stirnwände der Behälter 2, 3 werden mittels der Lappen 40, 21 und den außenliegenden Seitenwänden 20 verschlossen.

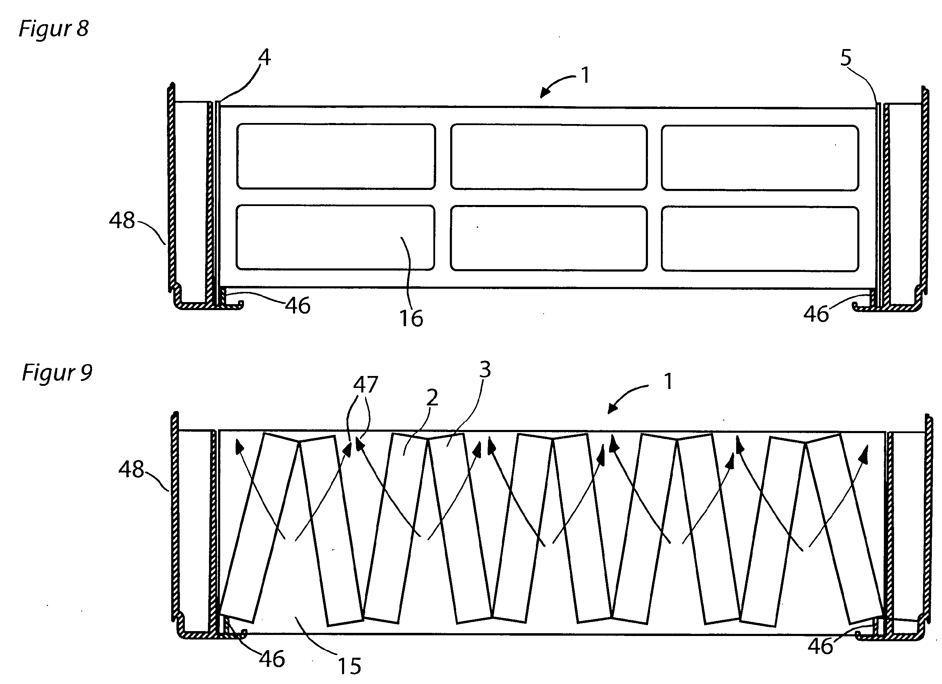

Die Figuren 8 und 9 zeigen im Schnitt, wie das Filterelement 1 in eine Filterelementaufnahme 48 eingesetzt sein kann. Das Filterelement 1 lässt in Kombination mit einer Filterelementaufnahme 48 mit einem umlaufenden Dichtungssteg 46 eine Dichtung zu, die ohne herkömmliche Schaumgummidichtung auskommt. Der umlaufende Dichtungssteg 46 dieser Filterelementaufnahme 48 dichtet jeweils mit dem Filterelementbehältern 2, 3 auf zwei Seiten und auf den anderen zwei Seiten wird eine Dichtung durch die aufstehende Seitenteile 4, 5 erzielt. Eine Dichtung zwischen Filterelement 1 und Filterelementaufnahme 48 ist natürlich auch mit einer herkömmlichen Schaumgummidichtung möglich. Dies erhöht jedoch den Arbeits- und Materialaufwand.
In Figur 9 ist deutlich die Luftdurchströmungsrichtung 47 dargestellt. Die zu filternde Luft strömt das Filterelement 1 zum Beispiel von unten an, durchströmt das im Filterbehälter 2, 3 enthaltene Filtermedium und verlässt das Filterelement 1 oben wieder durch die Öffnungen 16.

### Liste der Bezugszeichen

- 1: Filterelement
- 2: Behälter
- 3: Behälter
- 4: Seitenteil
- 5: Seitenteil

- 10: Faltzuschnitt
- 11: Mittellinie
- 12: Hälfte
- 13: Hälfte
- 14: Frontabschnitt (-wand)
- 15: Rückabschnitt (-wand)
- 16: Öffnung
- 17: Seitenabschnitt (-wand)
- 18: Seitenabschnitt (-wand)
- 19: Lappen
- 20: Stirnabschnitt -(wand)
- 21: Lappen
- 22: Falzlinie
- 23: Falzlinie
- 24: Falzlinie
- 25: Falzlinie
- 26: Falzlinie
- 27: Falzlinie
- 28: Gitternetz
- 29: Abstandhalter
- 30: Filtermedium
- 31: Lappen
- 32: Lappen
- 33: Verbindungsabschnitt
- 34: Pfeilrichtung
- 35: Pfeilrichtung
- 36: Falzlinie
- 37: Falzlinie
- 38: Zwischenwand
- 39: Lappen
- 40: Lappen
- 41: Öffnung
- 42: Gitternetz
- 43: Filtervlies
- 44: Falzlinie
- 45: Falzlinie
- 46: Dichtungssteg
- 47: Luftdurchströmungsrichtung
- 48: Filterelementaufnahme

## Patentansprüche

1. Einweg-Filterelement, welches umfasst:
einen ersten aus einem Faltzuschnitt (10) gebildeten Behälter (2) und
einen zweiten aus dem selben Faltzuschnitt (10) gebildeten Behälter (3),
wobei jeder Behälter eine mit Öffnungen (16) versehene Front- und Rückwand (14; 15), eine erste und zweite Seitenwand (17; 18) und eine erste und zweite Stirnwand (20) aufweist und ein Filtermedium (30) beinhaltet,
wobei die beiden Behälter (2; 3) längs ihrer ersten Seitenwände (17) beweglich miteinander verbunden und in einem definierten Winkel zueinander mit ihren Stirnwänden (20) zwischen zwei Seitenteilen (4; 5) gehalten sind.

2. Einweg-Filterelement nach Anspruch 1, **dadurch gekennzeichnet, dass** die erste Seitenwand (17) entlang einer Falzlinie (25) mit der Frontwand (14) verbunden ist, dass die Frontwand entlang einer Falzlinie (24) mit der zweiten Seitenwand (18) verbunden ist, dass die zweite Seitenwand entlang einer Falzlinie (23) mit der Rückwand (15) verbunden ist, dass die Rückwand entlang einer Falzlinie (22) mit einem Lappen (19) verbunden ist, dass die Frontwand (14) entlang jeweils einer Falzlinie (27) mit Lappen (21) verbunden ist, und dass die Rückwand (15) entlang der Falzlinie (26) mit Stirnwänden (20) verbunden ist, und jeder Hälfte (12; 13) des Faltzuschnitts (10) durch Falten entlang der Falzlinien zu jeweils einem im Querschnitt rechteckigen Behälter (2; 3) gefaltet ist, dessen Front- und Rückwand sowie die Seitenwände im wesentlichen parallel und in einem Abstand zueinander angeordnet sind, wobei die Außenseite des Lappens (19) mit der Innenseite der ersten Seitenwand (17) verbunden ist und die Innenseiten der Stirnwände (20) jeweils mit den Außenseiten der Lappen (21) verbunden sind.

3. Einweg-Filterelement nach einem der vorhergehenden Ansprüche, **dadurch gekennzeichnet, dass** auf den Innenseiten der Front- und Rückwand (14; 15) ein engmaschiges Gitter oder Netz (28) angebracht ist, dessen Maschen derart dimensioniert sind, dass sie einen freien Gasdurchtritt erlauben, das Filtermedium jedoch im Behälter (2; 3) zurückhalten

4. Einweg-Filterelement nach einem der vorhergehenden Ansprüche, **dadurch gekennzeichnet, dass** zwischen der Front- und der Rückwand (14; 15) mindestens ein Abstandhalter (29) angeordnet ist.

5. Einweg-Filterelement nach einem der vorhergehenden Ansprüche, **dadurch gekennzeichnet, dass** mehrere Behälter (2; 3) zwischen den Seitenteilen (4; 5) gehalten sind.

6. Einweg-Filterelement nach einem der vorhergehenden Ansprüche, **dadurch gekennzeichnet, dass** die Seitenteile (4; 5) aus einem Faltzuschnitt gebildet sind.

7. Einweg-Filterelement nach einem der vorhergehenden Ansprüche, **dadurch gekennzeichnet, dass** die Seitenteile (4; 5) viereckig sind, an einer Längsseite Lappen (31) und an der anderen Längsseite durch Verbindungsabschnitte (33) verbundene Lappen (32) aufweisen, wobei die Lappen (31; 32) entlang von Falzlinien (36; 27) derart gefaltet sind, dass die auf den Seitenteilen (4; 5) zu liegen kommen und sich zwischen den Lappen (31; 32) definierte Aufnahmen für die Stirnseiten (20) der Behälter (2; 3) ergeben.

8. Einweg-Filterelement nach einem der vorhergehenden Ansprüche, **dadurch gekennzeichnet, dass** die Behälter (2; 3) zueinander V-förmig angeordnet sind.

9. Einweg-Filterelement nach einem der vorhergehenden Ansprüche, **dadurch gekennzeichnet, dass** die Behälter (2; 3) in zwei Kammern unterteilt sind.

10. Einweg-Filterelement nach einem der vorhergehenden Ansprüche, **dadurch gekennzeichnet, dass** eine Unterteilung der Behälter (2; 3) durch eine Zwischenwand (38) erfolgt, die entlang einer Falzlinie (44) mit dem Lappen (19) verbunden ist, einen Lappen (39) aufweist, der in gefaltetem Zustand des Behälters mit der zweiten Seitenwand (18) verbunden wird und Lappen (40) aufweist, die mit den stirnseitigen Lappen (21) verbunden werden.

11. Einweg-Filterelement nach einem der vorhergehenden Ansprüche, **dadurch gekennzeichnet, dass** die Zwischenwand (38) Öffnungen (41) aufweist, die mit einem engmaschigen Gitter oder Netz (42) abgedeckt sind, wobei die Maschen des Gitters oder Netzes derart dimensioniert sind, dass sie einen freien Gasdurchtritt erlauben, das Filtermedium (30; 43) jedoch zurückhalten.

12. Faltzuschnitt zur Herstellung von zwei beweglich miteinander verbundenen, ein Filtermedium (30) aufnehmenden Behältern (2; 3) eines Einweg-Filterelements (1), wobei der Faltzuschnitt zwei Hälften (12; 13) aufweist und jeder Hälfte umfasst:
eine erste Seitenwand (17), die entlang einer Falzlinie (25) mit einer Frontwand (14) verbunden ist, eine zweite Seitenwand (18), die entlang einer Falzlinie (24) mit der Frontwand verbunden ist, eine Rückwand (15), die entlang einer Falzlinie (23) mit der zweiten Seitenwand (18) verbunden ist, einen Lappen (19), der entlang einer Falzlinie (22) mit der Rückwand (15) verbunden ist, Lappen (21), die entlang jeweils einer Falzlinie (27) mit der Frontwand (14) verbunden sind, und Stirnwände (20), die entlang der Falzlinie (26) mit der Rückwand (15) verbunden sind.

13. Faltzuschnitt nach Anspruch 12, **dadurch gekennzeichnet, dass** jede Hälfte (12; 13) des Faltzuschnitts (10) durch Falten entlang der Falzlinien zu jeweils einem im Querschnitt rechteckigen Behälter (2; 3) gefaltet ist, dessen Front und Rückwand sowie die Seitenwände im wesentlichen parallel und in einem Abstand zueinander angeordnet sind, wobei die Außenseite des Lappens (19) mit der Innenseite der ersten Seitenwand (17) verbunden ist und die Innenseiten der Stirnwände (20) jeweils mit den Außenseiten der Lappen (21) verbunden sind.

14. Faltzuschnitt nach Anspruch 12 oder 13, **dadurch gekennzeichnet, dass** die Front- und Rückwand (14; 15) jeweils mehrere Öffnungen (16) besitzen.

15. Faltzuschnitt nach Anspruch 12 bis 14, **dadurch gekennzeichnet, dass** die Öffnungen (16) in der Front- und Rückwand mit einem engmaschigen Gitter oder Netz (28) abgedeckt sind, wobei die Maschen des Gitters oder Netzes derart dimensioniert sind, dass sie einen freien Gasdurchtritt erlauben, das Filtermedium jedoch im Behälter (2; 3) zurückhalten.

16. Faltzuschnitt nach einem der Ansprüche 12 bis 15, **dadurch gekennzeichnet, dass** eine Zwischenwand (38) vorgesehen ist, die entlang einer Falzlinie (44) mit dem Lappen (19) verbunden ist, einen Lappen (39) aufweist, der in gefaltetem Zustand des Behälters mit der zweiten Seitenwand (18) verbunden wird und Lappen (40) aufweist, die mit den stirnseitigen Lappen (20) verbunden werden.

17. Faltzuschnitt nach einem der Ansprüche 12 bis 16, **dadurch gekennzeichnet, dass** die Zwischenwand (38) Öffnungen (41) aufweist, die mit einem engmaschigen Gitter oder Netz (42) abgedeckt sind, wobei die Maschen des Gitters oder Netzes derart dimensioniert sind, dass sie einen freien Gasdurchtritt erlauben, das Filtermedium (30; 43) jedoch zurückhalten.

18. Faltzuschnitt nach einem der Ansprüche 12 bis 17, **dadurch gekennzeichnet, dass** der Faltzuschnitt (10) aus Karton besteht.
